# EUROPEAN PATENT APPLICATION

(11) **EP 1 417 995 A1**
(43) Date of publication of application: **12.05.2004**
(21) Application number: 03256779.4
(22) Date of filing: 28.10.2003
(51) Int. Cl.: B01D 53/04, B01D 53/047, B01D 53/56

(54) **Process and device for adsorption of nitrous oxide from a feed gas stream**

(30) Priority: 30.10.2002 US 283441
(71) Applicant: AIR PRODUCTS AND CHEMICALS, INC., Allentown, PA 18195-1501 (US)
(72) Inventor: Kalbassi, Mohammad Ali, Weybridge Surrey KT13 8SP (GB); Salter, Elizabeth Helen, Stoke-on-Trent Straffordshire ST7 2PP (GB); Raiswell, Christopher James, Crewe CW1 8JQ (GB); Golden, Timothy Christopher, Allentown, PA 18104 (US); Taylor, Fred William, Coplay, PA 18037 (US)
(74) Representative: Geary, Stephen

(57) **Abstract**

A process for removing nitrous oxide from a feed gas by contacting the gas stream with an adsorbent having a nitrous oxide Henry's law constant at 30 °C of 14 mmole/g/atm or higher and nitrous oxide/carbon dioxide Henry's law selectivity at 30 °C of less than 0.49, to form a purified gas stream and periodically regenerating the adsorbent at low temperature with a flow of regeneration gas at a temperature between 30 and 100 °C. The process is especially useful in air separation processes.

## Description

The invention relates to a process for adsorption of nitrous oxide from a feed gas stream. In particular, the invention relates to a thermal swing adsorption process for removing nitrous oxide from air to render it suitable for downstream processing, especially cryogenic purification.

The cryogenic purification of air generally requires a pre-purification step for the removal of high boiling and hazardous materials. High boiling air components include water and carbon dioxide. If removal of these impurities from ambient air is not achieved, water and carbon dioxide may freeze out in cold sections of the separation process causing pressure drop and flow and operational problems. Various hazardous materials including acetylene and other hydrocarbons are desirably also removed. High boiling hydrocarbons may result in an explosion hazard in processes in which liquid oxygen is present.

Nitrous oxide (N₂O) is present in air as a minor component at about 0.3 ppm. Nitrous oxide has been implicated in contributing to the greenhouse effect and to destruction of the ozone layer. The nitrous oxide concentration in the atmosphere is believed to be steadily increasing at about 0.2 to 0.3 % a year. Nitrous oxide is known to enhance combustion of organic compounds and is shock sensitive. This means that nitrous oxide presents a potential safety hazard. In addition, nitrous oxide presents potential operation problems in the pre-purification of air due to solids formation in cold sections of the process. There is significant interest in the industry in removing trace nitrous oxide from ambient air prior to cryogenic distillation.

Wenning ('Nitrous Oxides in Air Separation Plants', Proceedings from MUST, 1996, p. 79-89) highlighted the problem of nitrous oxide in air separation plants, indicating that the problem has been recognised only fairly recently. Problems due to solids formation noted in air separation plants, possibly due to nitrous oxide, were generally attributed to carbon dioxide. In addition, as the required purity level of gaseous products in certain applications has increased, greater attention has been paid to nitrous oxide and its removal from air.

Known pre-purification processes for adsorptive clean removal of components from gases for example air, include thermal swing adsorption (TSA) processes, for example as described in US Patents Nos. 4541851 and 5137548 and pressure swing adsorption (PSA) processes for example as described in US Patent No. 5232474. TSA and PSA processes both involve contacting a feed gas stream containing an unwanted component with an adsorbent, which is periodically regenerated. Regeneration takes place before the unwanted component is present in the purified gas stream emerging from the adsorbent, so called "breakthrough". In TSA, regeneration is achieved by contacting the adsorbent with a regeneration gas at an elevated temperature. In PSA, regeneration is achieved by exposing the adsorbent to low pressure conditions. Processes involving both temperature and pressure changes to regenerate the adsorbent are also known and generally referred to as temperature, pressure swing adsorption (TPSA) and thermally enhanced pressure swing adsorption (TEPSA). For ease of reference herein the term "TSA" also includes TPSA and TEPSA processes unless stated otherwise.

Wenning shows that in current TSA processes, nitrous oxide is less strongly adsorbed than carbon dioxide on zeolites such as 5A. This may lead to breakthrough of nitrous oxide prior to carbon dioxide, which results in nitrous oxide exiting the TSA stage of the process and entering the cold section of the plant. The same situation, that is, breakthrough of nitrous oxide prior to carbon dioxide, exists in standard alumina-based PSA. US Patent No. 5919286 discloses a process in which a layer of zeolite is employed to address this problem at the product end of the PSA bed for nitrous oxide removal.

Catalysts are available which can convert nitrous oxide to nitrogen and oxygen, but these catalysts typically function at elevated temperatures.

Adsorbents that are useful for the removal of nitrous oxide from ambient air in TSA processes are known. For example, US Patent No. 6106593 discloses that adsorbents having a Henry's law selectivity for nitrous oxide compared to carbon dioxide of 0.49 or more at 30 °C such as calcium and barium exchanged X zeolites and sodium mordenite are useful for nitrous oxide removal from air in TSA applications.

European Patent Application Publication No. 0995477 discloses that faujasite zeolites such as CaLSX (low silica X) are good adsorbents for nitrous oxide removal from air in a TSA process. European Patent Application Publication No. 1092465 discloses adsorbents for nitrous oxide removal from air by TSA processes. The materials include LSX zeolites in various cation forms.

European Patent Application Publication No. 1064978 discloses the use of barium exchanged zeolite for the removal of carbon dioxide, nitrous oxide and organic impurities from air prior to cryogenic distillation.

It has now been found by the inventors that selection of an adsorbent having certain characteristics enables the adsorbent to be regenerated at a lower temperature than typically employed for nitrous oxide removal from a gas stream in TSA processes.

In a first aspect, the present invention relates to a process for removing nitrous oxide from a feed gas stream containing nitrous oxide, comprising the steps of:
contacting the gas stream with a first adsorbent for adsorbing nitrous oxide,the first adsorbent having a nitrous oxide Henry's law constant at 30 °C of 14 mmol/g/atm or higher, preferably 73 mmol/g/atm or higher and a nitrous oxide/carbon dioxide Henry's law selectivity at 30 °C of less than 0.49 to form a purified gas stream; and
periodically regenerating the first adsorbent by contacting the adsorbent with a regeneration gas at a temperature between 30 and 100 °C.

Suitably, the regeneration gas is at a temperature between 40 and less than 80°C.

Suitably, the first adsorbent is selected from the group consisting of calcium A zeolite (CaA), calcium mordenite, and mixtures thereof. Suitably, the first adsorbent has greater than 50 % calcium exchange. Suitably, the first adsorbent is in binderless form. The first adsorbent is selected so as to be capable of regeneration at the temperature at which the regeneration step of the process is to be operated.

Suitably, the temperature of the feed gas stream is between 0 and 50 °C. Suitably, the pressure of the feed gas stream is 2 to 20 atm absolute.

Suitably, the pressure of the regeneration gas is 0.1 to 20 atm absolute.

Suitably, the molar ratio between the regeneration gas flow and the feed gas stream flow is between 0.1 and 0.6 and preferably between 0.3 and 0.5.

Preferably, the feed gas stream is air.

Suitably, the regeneration gas is selected from the group consisting of oxygen, nitrogen, methane, hydrogen, argon and mixtures of two or more thereof.

Preferably, the process of the invention is a process for the removal of carbon dioxide and nitrous oxide from a feed gas stream, further comprising the step of contacting the feed gas stream with a bed of a second adsorbent for adsorbing carbon dioxide. In a preferred embodiment the feed gas stream is contacted with the second adsorbent before being contacted with the bed of the first adsorbent.

Suitably, the second adsorbent is selected from the group consisting of impregnated aluminas, impregnated composite alumina/zeolites, A zeolites, X zeolites for example binderless 13X zeolite and low silica X zeolites and mordenite and mixtures of two or more thereof. Preferably, the first and second adsorbents are the same material.

Preferably, the process is a process for removing water, carbon dioxide and nitrous oxide from a feed gas stream, and the process further comprises the step of passing the feed gas stream over a desiccant. Desirably, the feed gas stream is contacted with the desiccant before being contacted with the bed of the second adsorbent.

Suitably, the desiccant is selected from alumina, silica gel, impregnated aluminas, A zeolite, X zeolite and mixtures of two or more thereof.

Where radial beds are employed, the desiccant, second adsorbent and first adsorbent are desirably the same material as this, advantageously simplifies loading of the materials into the bed. In this case, the adsorbent preferably comprises a composite of zeolite and alumina suitably having a weight ratio of 70:30 to 30:70.

In a second aspect, the invention relates to a process for the separation of one or more components of air, comprising the steps of:
carrying out a process for removing nitrous oxide from a feed gas stream according to the first aspect of the invention to form a purified air stream;
liquefying the purified air stream; and
subjecting the liquefied purified air stream to cryogenic separation, preferably distillation, to separate one or more components of the purified air stream.

In a third aspect, the invention relates to an apparatus for removing nitrous oxide from a feed gas stream in a temperature serving adsorption process comprising an adsorption assembly comprising in fluid series connection an inlet assembly, a vessel adapted to receive a first adsorbent to remove nitrous oxide having a nitrous oxide Henry's law constant at 30°C of 14 mmole/g/atm or higher and a nitrous oxide/carbon dioxide Henry's law selectivity at 30 °C of less than 0.49 and an outlet assembly, a heater for heating regeneration gas, and further comprising control means for controlling the flow of the feed gas stream and regeneration gas through the adsorption assembly and for controlling the temperature of the regeneration gas between 30 and 100 °C.

In a preferred embodiment the apparatus is adapted to remove water, carbon dioxide and nitrous oxide from a feed gas stream and comprises two vessels, the vessels being arranged in parallel fluid connection and each vessel comprising in fluid series connection a first zone adapted to receive a desiccant to adsorb water, a second zone adapted to receive a second adsorbent to remove carbon dioxide and a third zone adapted to receive a first adsorbent to remove nitrous oxide.

In a fourth aspect, the invention provides for the use of an adsorbent having a nitrous oxide Henry's law constant at 30 °C of 14 mmole/g/atm or higher and a nitrous oxide/carbon dioxide Henry's law selectivity at 30 °C of less than 0.49 for the adsorption of nitrous oxide from a feed gas stream by contacting the feed gas stream with the adsorbent in a TSA process in which adsorbent is periodically regenerated by contacting regenerated gas at a temperature of 30 to 100°C to desorb adsorbed N₂O.

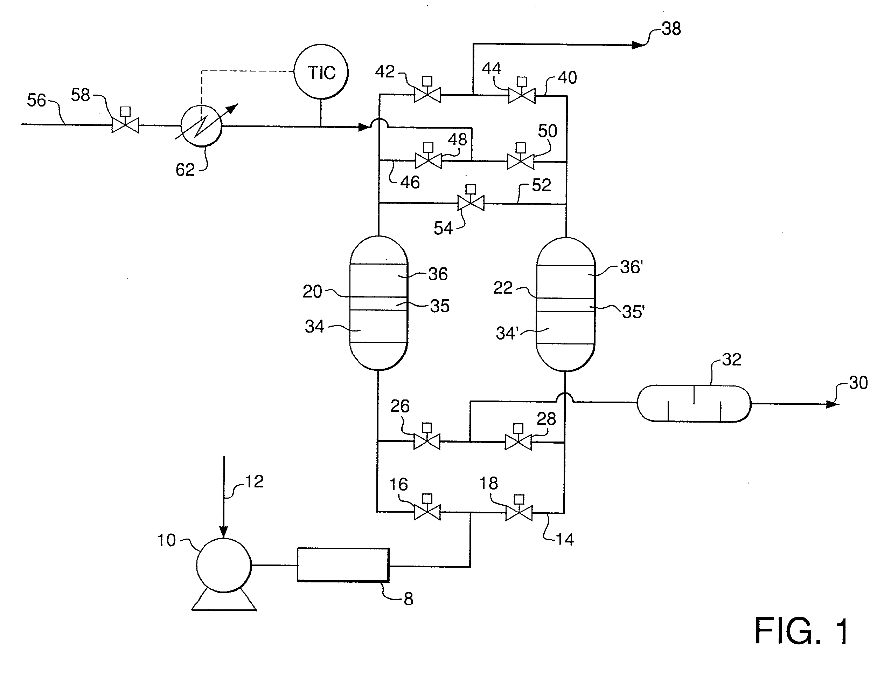

Figure 1 shows schematically an apparatus according to the third aspect of the invention used in a preferred embodiment of the first aspect of the invention.

In the preferred embodiment shown in Figure 1, air to be purified is supplied to a main air compressor system 10 at an inlet 12 in which it is compressed by a multi-stage compressor with inter- and after-cooling by heat exchange with water. Optionally, the compressed air feed is sub-cooled in a cooler 8. The cooled compressed air is supplied to an inlet manifold 14 containing inlet control valves 16 and 18 to which is connected a pair of adsorbent bed containing vessels 20 and 22. The inlet manifold is bridged downstream of the control valves 16 and 18 by a venting manifold 24 containing venting valves 26, 28 which serve to close and open connections between the upstream end of respective adsorbent vessels 20 and 22 and a vent 30 via a silencer 32. Each of the two adsorbent beds 20 and 22 contains three adsorbents. A lower portion of the adsorbent bed is designated by the numerals 34, 34' in respective beds, a central portion by the numerals 35, 35', and an upper portion by the numerals 36, 36'. Portion 34, 34' contains a desiccant (for example alumina) to adsorb water. Portion 35, 35' contains a second adsorbent (for example impregnated alumina) to adsorb carbon dioxide. Portion 36, 36'contains a first adsorbent to adsorb nitrous oxide (for example CaA).

In an alternative embodiment, adsorbents may be arranged in layers, for example adsorbents may be radially layered. It should be understood that the vessels 20 and 22 can each if desired be separated into smaller vessels arranged in series and references to "layers" of adsorbent above include arrangements in which the separate adsorbents are placed in separate vessels arranged in series and other conventional arrangements of adsorbents.

The apparatus has an outlet 38 connected to the down-stream ends of the two adsorbent vessels 20, 22 by an outlet manifold 40 containing outlet control valves 42, 44. The outlet is connected to an air separation unit (ASU). The outlet manifold 40 is bridged by a regenerating gas manifold 46 containing regenerating gas control valves 48 and 50. Upstream from the regenerating gas manifold 46, a line 52 containing a control valve 54 also bridges across the outlet manifold 40.

An outlet for regenerating gas is provided at 56 which through control valve 58 is connected to pass through a heater 62 to the regenerating gas manifold 46. The operation of the valves may be controlled by suitable programmable timing and valve opening means (not illustrated). The temperature of the gas flows is controlled by suitable gas temperature control means.

In operation air is compressed in the main compressor system 10 and is fed to the inlet manifold 14 and passes through one of the two vessels containing adsorbent. Starting from a position in which air is passing through open valve 16 to adsorbent vessel 20, and through open valve 42 to the outlet 38 and air separation unit, valve 18 in the inlet manifold will just have been closed to cut-off vessel 22 from the feed of air for purification. Valve 44 will just have closed also. At this stage valves 46, 50, 54, 26 and 28 are all closed. Bed 20 is thus on-line and bed 22 is to be regenerated.

To commence depressurisation of bed 22, valve 28 is opened and once the pressure in the vessel 22 has fallen to a desired level, valve 28 is kept open whilst valve 50 is opened to commence a flow of regenerating gas. The regenerating gas will typically be a flow of dry, carbon dioxide-free nitrogen obtained from the air separation unit cold box, possibly containing small amounts of argon, oxygen and other gases, to which the air purified in the apparatus shown is passed. Valve 58 is opened so that the regenerating gas is heated to a temperature of for instance 70°C before passing into the vessel 22. The exit purge gas emerges from the vent outlet 30 in a cooled state.

At the end of the allotted regeneration period, valve 58 may be closed to end the flow of regenerating gas and valve 54 may be opened to displace nitrogen from the adsorbent and, after the closing of valve 28, to repressurise the vessel 22 with purified air. Thereafter, valve 54 may be closed and valves 18 and 44 may be opened to put the vessel 22 back on line. The vessel 20 may then be regenerated in a similar manner and the whole sequence continued with the vessels being on-line, depressurising, regenerating, repressurising, and going back on-line in phase cycles of operation.

It will be appreciated that although the invention has been described with reference to preferred embodiments, many variations and modifications thereof are possible within the scope of the invention.

### Examples

### Comparative Example A

TSA experiments for removal of water, carbon dioxide and nitrous oxide from air were carried out in a two vessel system. Each vessel was 8 inches (20 cm) in diameter and 6 feet (1.8 m) long. The TSA cycle used was that described in US Patent No. 5614000. The bed volume was filled at the upstream end with 75 % base treated alumina, Alcan AA-300, formed by aqueous impregnation of the alumina with a potassium carbonate solution to produce 5 wt% potassium carbonate on activated alumina. The remaining downstream end 25 % of the bed volume was filled with CaX. The feed air temperature was 36 °C, the feed pressure was 7.3 bar absolute (7.3 x 10⁵ Pa) the regeneration pulse temperature was 70 °C, the total on-line time was 32 minutes (10 minutes heat, 16 minutes cool, 6 minutes switch), and the molar purge/air ratio was 0.45. Under these feed conditions, it was found that the time average carbon dioxide concentration of the bed effluent was about 14 ppm. This outlet concentration may be considered too high for utility in cryogenic air pre-purification systems. The target outlet carbon dioxide concentration is about 20 ppb on a time average basis. The use of the prior art adsorbent, CaX, at regeneration temperatures of 70 °C does not provide advantageous removal of carbon dioxide from the feed gas and as a consequence large amounts of carbon dioxide breakthrough are observed.

### Example 1

The same experiment as that described in Comparative Example A was carried out, but with the downstream 25 % of the bed volume filled with NaX instead of CaX. The on-line time was increased to 35 minutes (10 minutes heat, 19 minutes cool, 6 minutes switch) and the time average carbon dioxide concentration in the bed effluent was essentially 0 ppb. The use of NaX as opposed to CaX decreases the carbon dioxide concentration in the bed effluent at a regeneration temperature of 70 °C. The nitrous oxide removal capability of this system was also measured. It was determined that this cycle and adsorbent mix removed 82 % of the inlet nitrous oxide to the system (inlet nitrous oxide about 300 ppb). This nitrous oxide removal capability is suitable for cryogenic air separation processes in which removal of nitrous oxide to a level of 80% is acceptable.

### Example 2

The experiment described in Example1 was carried out, with the modification that the bed was filled with 30 vol% silica gel, 30 vol% base-treated alumina, 20 vol% NaX and 20 vol% 5A (CaA) zeolite with the 5A layer being on the product end of the bed and silica gel is on the feed end. The on-line time was increased to 37 minutes (10 minutes heat, 21 minutes cool and 6 minutes switch) and the time average carbon dioxide concentration in the bed effluent was 34 ppb. With this bed configuration, the nitrous oxide time average effluent concentration was essentially 0 ppb which corresponds to 100 % nitrous oxide removal. Clearly, the addition of a 5A layer to the top of the TSA improves the nitrous oxide removal capability of the system at low regeneration temperature. It is surprising that 5A would give good nitrous oxide removal results, especially since Wenning's initial work on nitrous oxide removal in TSA systems clearly showed that 5A demonstrated significant nitrous oxide breakthrough.

### Example 3

The carbon dioxide and nitrous oxide isotherms were measured on all adsorbents tested in Comparative Example A and Examples 1 and 2. The isotherms were measured at 30 °C following regeneration at 70 °C in flowing nitrogen. The Henry's law constants (initial isotherm slope) for carbon dioxide and nitrous oxide and the carbon dioxide/nitrous oxide selectivity (ratio of Henry's law constants) are given in Table 1.

**Table 1**

| Adsorbent | K H CO₂ at 30 °C (mmole/g/atm) | K H N₂O at 30 °C (mmole/g/atm) | Selectivity N₂O/CO₂ |
|---|---|---|---|
| NaX | 242 | 73 | 0.30 |
| CaA | 234 | 82 | 0.35 |
| Ca mordenite | 374 | 113 | 0.30 |
| Comparative Examples | | | |
| CaX | 1020 | 503 | 0.49 |
| Base-treated alumina | 23 | 0.35 | 0.015 |
| Silica gel | 1.0 | 0.42 | 0.42 |

From the results in Table 1, it is clear that materials with high nitrous oxide/carbon dioxide selectivity are not preferred for low temperature TSA removal of nitrous oxide from air. CaX has the highest carbon dioxide nitrous oxide selectivity and is the preferred material for TSA as taught in U.S. Patent No. 6106593 with high temperature regeneration. Also, silica gel has a high nitrous oxide/carbon dioxide selectivity, but its nitrous oxide capacity is too low to be effective for trace nitrous oxide removal. The low temperature regeneration experiments also showed that NaX zeolite showed high nitrous oxide removal capability. The CaA material tested (commercially available from UOP as UOP KEG 410) exhibited excellent nitrous oxide removal at a regeneration temperature of 70 °C. This material has a nitrous oxide Henry's law constant higher than that for NaX, but a nitrous oxide/carbon dioxide selectivity less than that of CaX. The optimal and preferred materials for nitrous oxide removal in low temperature TSA applications have a combination nitrous oxide Henry's law constant at 30 °C of 70 mmole/g/atm or higher and have a carbon dioxide/nitrous oxide selectivity of less than 0.49. In general, high selectivity adsorbents are preferred in adsorption applications. The results in Table 1 suggest that if an adsorbent has both a high nitrous oxide/carbon dioxide selectivity and a high nitrous oxide Henry's law constant, both carbon dioxide and/or nitrous oxide are adsorbed too strongly to be effectively regenerated at low temperatures. In a preferred embodiment of the invention the adsorbent comprises CaA, Ca mordenite or a mixture thereof as a final layer nitrous oxide adsorbent.

## Claims

1. A process for removing nitrous oxide from a feed gas stream, comprising the steps of:
contacting the gas stream with a first adsorbent for adsorbing nitrous oxide, the first adsorbent having a nitrous oxide Henry's law constant at 30 °C of 14 mmole/g/atm or higher and nitrous oxide/carbon dioxide Henry's law selectivity at 30 °C of less than 0.49, to form a purified gas stream; and
periodically regenerating the first adsorbent with a flow of regeneration gas at a temperature between 30 and 100 °C.

2. A process as claimed in Claim 1, wherein the regeneration gas is at a temperature between 40 and less than 80 °C.

3. A process as claimed in Claim 1 or Claim 2, wherein the first adsorbent is selected from the group consisting of calcium A zeolite, calcium mordenite, and mixtures thereof.

4. A process as claimed in Claim 3, wherein the first adsorbent has greater than 50% calcium exchange.

5. A process as claimed in Claim 3 or Claim 4, wherein the first adsorbent is in binderless form.

6. A process as claimed in any one of the preceding claims, wherein the temperature of the feed gas stream is between 0 and 50 °C.

7. A process as claimed in any one of the preceding claims, wherein the pressure of the feed gas stream is 2 to 20 atm absolute.

8. A process as claimed in any one of the preceding claims, wherein the pressure of the regeneration gas is 0.1 to 20 atm absolute.

9. A process as claimed in any one of the preceding claims, wherein the molar ratio between the regeneration gas flow and the feed gas stream flow is between 0.1 and 0.6.

10. A process as claimed in Claim 9, wherein the molar ratio between the regeneration gas flow and the feed gas stream flow is between 0.3 and 0.5.

11. A process as claimed in any one of the preceding claims, wherein the feed gas stream is air.

12. A process as claimed in any one of the preceding claims, wherein the regeneration gas is selected from the group consisting of oxygen, nitrogen, methane, hydrogen, argon and mixtures of two or more thereof.

13. A process as claimed in any one of the preceding claims, wherein the process is a process for the removal of carbon dioxide and nitrous oxide from a feed gas stream, further comprising the step of contacting the feed gas stream with a bed of a second adsorbent for adsorbing carbon dioxide before contacting the feed gas stream with the first adsorbent.

14. A process as claimed in Claim 13, wherein the first adsorbent is selected from the group consisting of impregnated aluminas, impregnated composite alumina/zeolites, A zeolites, X zeolites, low silica X zeolites and mixtures of two or more thereof.

15. A process as claimed in Claim 13 or Claim 14, wherein the first and second adsorbents are the same material.

16. A process as claimed in any one of Claims 13 to 15, wherein the process is a process for removing water, carbon dioxide and nitrous oxide from a feed gas stream, further comprising the step of contacting the feed gas stream with a desiccant before contacting the feed gas stream with the second adsorbent.

17. A process as claimed in Claim 16, wherein the desiccant is selected from alumina, silica gel, impregnated aluminas, A zeolite, X zeolite and mixtures of two or more thereof.

18. A process for the separation of some or all components of air, comprising the steps of:
carrying out a process as defined in Claim 11 to form a purified air stream;
liquefying the purified air stream; and
subjecting the liquefied purified air stream to cryogenic distillation to produce separated components of air.

19. Apparatus for removing nitrous oxide from a feed gas stream in a temperature serving adsorption process comprising an adsorption assembly comprising in fluid series connection an inlet assembly, a vessel adapted to receive a first adsorbent to remove nitrous oxide having a nitrous oxide Henry's law constant at 30°C of 14 mmole/g/atm or higher and a nitrous oxide/carbon dioxide Henry's law selectivity at 30 °C of less than 0.49 and an outlet assembly, a heater for heating regeneration gas, and further comprising control means for controlling the flow of the feed gas stream and regeneration gas through the adsorption assembly and for controlling the temperature of the regeneration gas between 30 and 100 °C.

20. Apparatus according to claim 19 for removing water, carbon dioxide and nitrous oxide from a feed gas stream comprising two vessels, the vessels being arranged in parallel fluid connection and each vessel comprising in fluid series connection a first zone adapted to receive a desiccant to adsorb water, a second zone adapted to receive a second adsorbent to remove carbon dioxide and a third zone adapted to receive a first adsorbent to remove nitrous oxide.
